# EUROPÄISCHE PATENTSCHRIFT

(11) **EP 2 059 913 B1**
(45) Veröffentlichungstag und Bekanntmachung des Hinweises auf die Patenterteilung: **09.12.2009**
(21) Anmeldenummer: 07718361.4
(22) Anmeldetag: 26.03.2007
(51) Int. Cl.: G08C 17/02, H04M 1/725, H04L 12/28, H04W 12/06

(54) **VERFAHREN ZUR AUTHENTIFIZIERUNG ZUMINDEST EINES MOBILFUNKENDGERÄTES**
METHOD FOR AUTHENTICATION OF AT LEAST ONE MOBILE RADIO TERMINAL
PROCÉDÉ D'AUTHENTIFICATION D'AU MOINS UN TERMINAL DE TÉLÉPHONIE MOBILE

(30) Priorität: 29.03.2006 AT 5372006
(43) Veröffentlichungstag der Anmeldung: 20.05.2009
(73) Patentinhaber: CSANK, Christian, 2500 Baden (AT)
(72) Erfinder: CSANK, Christian, 2500 Baden (AT)
(86) Internationale Anmeldenummer: PCT/AT2007/000144
(87) Internationale Veröffentlichungsnummer: WO 2007/109820

(56) Entgegenhaltungen:
- WO-A-01/57824
- US-A1- 2003 078 032
- US-A1- 2005 266 873

## Beschreibung

Die Erfindung betrifft ein Verfahren zur Autorisierung zumindest eines Mobilfunkendgerätes mittels eines Authentifizierungsendgerätes, wobei das zumindest eine Mobilfunkendgerät eine Identifikationsnummer aufweist und die Identifikationsnummer des zumindest einen Mobilfunkendgerätes in dem Authentifizierungsendgerät gespeichert ist, wobei das Authentifizierungsendgerät, sobald ein Mobilfunkendgerät in einen Sende/Empfangsbereich des Authentifizierungsendgerätes gelangt, über Funk abfragt und überprüft, ob eine Identifikationsnummer des Mobilfunkendgerätes mit der gespeicherten Identifikationsnummer übereinstimmt.

Weiters betrifft die Erfindung ein System zur Autorisierung zumindest eines Mobilfunkendgerätes mittels eines Authentifizierungsendgerätes, wobei das zumindest eine Mobilfunkendgerät eine Identifikationsnummer aufweist und die Identifikationsnummer des zumindest einen Mobilfunkendgeräts in dem Authentifizierungsgerät gespeichert ist, wobei das Authentifizierungsendgerät dazu eingerichtet ist, sobald ein Mobilfunkendgerät in einen Sende/Empfangsbereich des Authentifizierungsendgerätes gelangt, über Funk abzufragen und zu überprüfen, ob eine Identifikationsnummer des Mobilfunkendgerätes mit der gespeicherten Identifikationsnummer übereinstimmt.

Die DE 601 06 665 T2 beschreibt ein Verfahren der eingangs genannten Art, bei welchem von dem Authentifizierungsendgerät ein Authentifizierungsschlüssel generiert und über eine Bluetooth Verbindung an das Mobilfunkendgerät übermittelt wird. Hierauf erfolgt in dem Mobilfunkendgerät ein abschließender Authentifizierungsschritt anhand des übermittelten Authentifizierungsschlüssels. Bei dem bekannten Authentisierungsverfahren ist es von Nachteil, dass in dem Mobilfunkendgerät eine Software installiert sein muss, um eine Authentifizierung zu ermöglichen. Durch die zusätzlich notwendige Software entstehen weitere Herstellungs- und Installationskosten.

Die WO 01/23694 A1 offenbart ein automatisches Verriegelungssystem, beispielsweise für ein Türschloss, bei dem eine mobile Einheit mittels einer Identifikationsnummer authentifiziert wird. Das System umfasst eine Kontrolleinheit mit einem Speicher, eine Verriegelungseinheit sowie eine mobile Einheit mit einer spezifischen Identifikationsnummer. Die Kontrolleinheit sendet ein erstes Signal aus, auf das die mobile Einheit unter Übermittlung ihrer Identifikationsnummer reagiert, sobald sie sich im Sende/Empfangsbereich der Kontrolleinheit befindet. Wenn die Identifikationsnummer der Kontrolleinheit bekannt ist, wenn sich also die Identifikationsnummer im Speicher der Kontrolleinheit befindet, wird die Verriegelungseinheit deaktiviert. Das Rücksenden der Identifikationsnummer der mobilen Einheit kann an eine Bestätigung durch den Nutzer der mobilen Einheit gebunden sein. Eine solche Bestätigung stellen beispielsweise die Eingabe eines PIN-Codes oder das Drücken einer beliebigen Taste der mobilen Einheit dar. Der Nachteil an diesem System besteht darin, dass der Nutzer der mobilen Einheit im Fall, dass für die Authentifizierung keine Bestätigung verlangt wird, weder beeinflussen kann noch weiß, ob und für welche Aktion er sich authentifiziert, sobald er in den Sende/Empfangsbereich der Kontrolleinheit eintritt. Auch wenn das Rücksenden der Identifikationsnummer nur nach Eingabe einer Bestätigung erfolgt, weiß der Nutzer der mobilen Einheit nicht, für was er sich authentifiziert.

Es ist daher eine Aufgabe der Erfindung, auf einfache Weise eine Autorisierung eines Mobilfunkendgerätes zu ermöglichen, ohne auf dem Mobilfunkgerät zusätzliche Software installieren zu müssen.

Unter einem Mobilfunkendgerät wird in diesem Dokument jedes Endgerät verstanden, welches über Funk mit einem anderen Endgerät Daten austauschen kann, insbesondere Mobilfunktelefone, Personal Digital Assitants (PDA's), etc.

Diese Aufgabe wird mit einem Verfahren der eingangs genannten Art erfindungsgemäß dadurch gelöst, dass der Identifikationsnummer des zumindest einen Mobilfunkendgeräts in dem Authentifizierungsendgerät zumindest ein Name zugeordnet ist und weiters das Authentifizierungsendgerät bei der Abfrage oder Überprüfung, ob eine Identifikationsnummer des Mobilfunkendgerätes mit der gespeicherten Identifikationsnummer übereinstimmt, im Fall einer Übereinstimmung unter dem der Identifikationsnummer zugeordneten Namen einen Verbindungsaufbau mit dem Mobilfunkendgerät initiiert, wobei der Name auf dem Mobilfunkendgerät angezeigt wird und das Authentifizierungsendgerät einen Verbindungsaufbau abbricht, sobald von Seiten des zumindest einen Mobilfunkendgerätes der Verbindungsaufbau mit dem unter dem angezeigten Namen auftretenden Authentifizierungsendgerät bestätigt wird.

Im Folgenden wird aus Gründen der einfacheren Lesbarkeit anstelle von Authentifizierungsendgerät auch der Begriff Authentifizierungsmaster und anstelle von Mobilfunkendgerät auch der Begriff Client verwendet.

Es ist ein Verdienst der Erfindung eine Autorisierung ohne eine zwingende Erweiterung der Hard- oder Software des Mobilfunkendgerätes durchführen zu können, wobei durch das Authentifizierungsendgerät sichergestellt ist, dass ein Eindringen/Authentifizieren von unbefugten Dritten unterbunden wird.

Vorteilhafterweise wird nach Bestätigung des Verbindungsaufbaus durch das Mobilfunkendgerät ein Aktuator betätigt. Auf diese Weise kann nach erfolgter Authentifizierung automatisch eine gewünschte Aktion autorisiert werden, wie beispielsweise das Öffnen oder Schließen einer Tür, ohne dass hierzu eine weitere Aufforderung von Seiten des Benutzers erforderlich ist. Gemäß einer vorteilhaften Variante der Erfindung beschreibt der Name, unter dem sich der Authentifizierungsmaster dem Client zu erkennen gibt, eine von dem Aktuator durchzuführende Tätigkeit. Auf diese Weise erkennt der Benutzer nach erfolgter Authentifizierung sofort, welche Aktion durchgeführt wird, wenn er dem Verbindungsaufbau zustimmt.

Weiters kann der Name des Authentifizierungsmasters in Abhängigkeit von einer zuletzt durchgeführten Aktion des Aktuators geändert werden. So kann beispielsweise der Name von "Tür öffnen" auf "Tür schließen" geändert werden, wenn die letzte Aktion in dem Öffnen der Tür bestanden hat, und vice versa.

Günstigerweise ist die Identifikationsnummer eine herstellerseitig einmalig vergebene Gerätenummer. Auf diese Weise kann jeder Client sehr einfach und ohne weitere Implementierungen vornehmen zu müssen identifiziert werden.

Weiters kann das Authentifizierungsendgerät auch während eines Verbindungsaufbaus zu dem zumindest einen Mobilfunkendgerät überprüfen, ob andere Mobilfunkendgeräte in seinem Sende/Empfangsbereich vorhanden sind, wobei das Authentifizierungsendgerät gleichzeitig zu mehreren Mobilfunkendgeräten je eine Verbindung aufbauen kann. Auf diese Weise ist sichergestellt, dass auch mehrere Clients parallel von dem Authentifizierungsmaster bedient werden können und es zu keinen Funktionsausfällen infolge bestehender Client-Master Verbindungen kommt.

Die Erfindung lässt sich auf besonders einfache Weise realisieren, wenn zur Durchführung des Verfahrens ein Bluetooth-, ZigBee- oder WIFI-Funkstandard verwendet wird, wobei prinzipiell natürlich auch proprietäre Protokolle zum Einsatz kommen können.

Die oben genannte Aufgabe lässt sich auch mit einem System der eingangs genannten Art erfindungsgemäß dadurch lösen, dass der Identifikationsnummer des zumindest einen Mobilfunkendgeräts in dem Authentifizierungsendgerät zumindest ein Name zugeordnet ist, und weiters das Authentifizierungsendgerät dazu eingerichtet ist, bei der Abfrage oder Überprüfung, ob eine Identifikationsnummer des Mobilfunkendgerätes mit der gespeicherten Identifikationsnummer übereinstimmt, im Fall einer Übereinstimmung unter dem der Identifikationsnummer zugeordneten Namen einen Verbindungsaufbau mit dem Mobilfunkendgerät zu initiieren, wobei das Mobilfunkendgerät dazu eingerichtet ist, den Namen auf dem Mobilfunkendgerät anzuzeigen und das Authentifizierungsendgerät weiters dazu eingerichtet ist, einen Verbindungsaufbau abzubrechen, sobald von Seiten des zumindest einen Mobilfunkendgerätes der Verbindungsaufbau mit dem unter dem angezeigten Namen auftretenden Authentifizierungsendgerät bestätigt ist.

Vorteilhafterweise ist das System dazu eingerichtet, nach Bestätigung des Verbindungsaufbaus durch das Mobilfunkendgerät einen Aktuator zu betätigen.

Gemäß der bevorzugten Variante der Erfindung beschreibt der Name, unter welchem eine Verbindung mit dem Mobilfunkendgerät aufgebaut werden soll, eine von dem Aktuator durchzuführende Tätigkeit. Weiters ist es von Vorteil, wenn das System dazu eingerichtet ist, den Namen in Abhängigkeit von einer zuletzt durchgeführten Aktion des Aktuators zu ändern.

Weitere Vorteile lassen sich dadurch erzielen, dass die Identifikationsnummer eine herstellerseitig einmalig vergebene Gerätenummer ist.

Darüber hinaus kann das Authentifizierungsendgerät dazu eingerichtet sein, auch während eines Verbindungsaufbaus zu dem zumindest einen Mobilfunkendgerät zu überprüfen, ob andere Mobilfunkendgeräte in seinem Sende/Empfangsbereich vorhanden sind. Günstigerweise ist das Authentifizierungsendgerät weiters dazu eingerichtet, gleichzeitig zu mehreren Mobilfunkendgeräten je eine Verbindung aufzubauen.

Eine besonders einfache Realisierung der Erfindung lässt sich dadurch erzielen, dass das Authentifizierungsendgerät und das zumindest eine Mobilfunkendgerät dazu eingerichtet sind, gemäß dem Bluetooth-, ZigBee- oder Wi-Fi-Funkstandard Daten auszutauschen.

Die Erfindung samt weiteren Vorteilen wird im Folgenden anhand einiger nicht einschränkender Ausführungsbeispiele näher erläutert, welche in der Zeichnung dargestellt sind. In dieser zeigen schematisch:

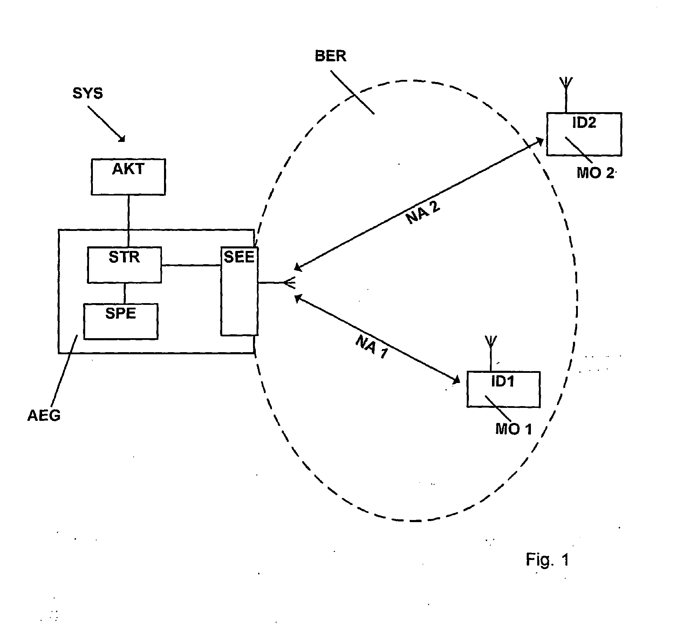

Fig. 1 ein Blockdiagramm eines erfindungsgemäßen Systems;
Fig. 2 einen Speicherinhalt eines Authentifizierungsendgerätes;
Fig. 3 ein erstes Flussdiagramm eines erfindungsgemäßen Verfahrens und
Fig. 4 ein zweites Flussdiagramm eines erfindungsgemäßen Verfahrens
Gemäß Fig. 1 weist ein erfindungsgemäßes System SYS zur Autorisierung eines oder mehrerer Mobilfunkendgeräte MO1, MO2 ein Authentifizierungsendgerät AEG auf. Die Mobilfunkendgeräte MO1, MO2 weisen je eine Identifikationsnummer ID1, ID2 auf.

In dem Authentifizierungsendgerät AEG ist die Identifikationsnummer ID1, ID2 mindestens eines berechtigten Mobilfunkendgerätes MO1, MO2 gespeichert.

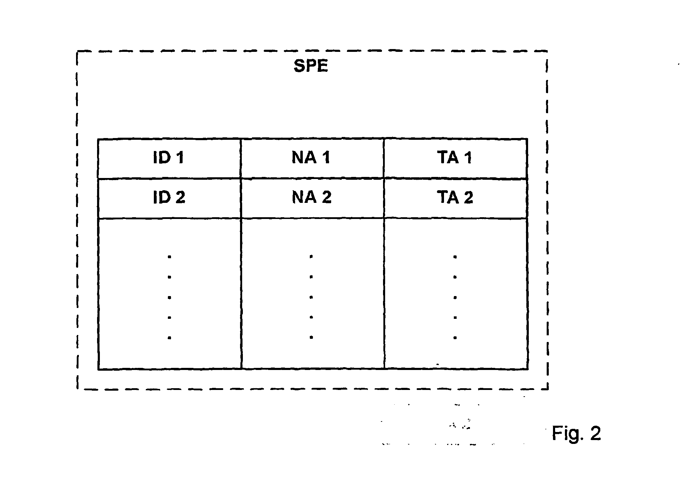

Wie aus Fig. 2 ersichtlich ist der Identifikationsnummer ID1, ID2 in dem Authentifizierungsendgerät AEG weiters zumindest ein Name NA1, NA2 zugeordnet.

Das Authentifizierungsendgerät AEG ist dazu eingerichtet, sobald ein Mobilfunkendgerät MO1, MO2 in einen Sende/ Empfangsbereich BER des Authentifizierungsendgerätes AEG gelangt, über Funk abzufragen und zu überprüfen, ob die Identifikationsnummer ID1, ID2 des Mobilfunkendgerätes MO1, MO2 mit der gespeicherten Identifikationsnummer ID1, ID2 übereinstimmt.

Im Fall einer Übereinstimmung der Identifikationsnummern ID1, ID2 ist der Authentifizierungsmaster dazu konfiguriert, unter dem der Identifikationsnummer ID1, ID2 zugeordneten Namen NA1, NA2 einen Verbindungsaufbau mit dem entsprechenden Mobilfunkendgerät MO1, MO2 zu initiieren. Das berechtigte Mobilfunkendgerät MO1, MO2 ist seinerseits dazu, eingerichtet, diesen Namen NA1, NA2 auf dem Mobilfunkendgerät MO1, MO2, beispielsweise auf einem Display, anzuzeigen.

Darüber hinaus ist das Authentifizierungsendgerät AEG dazu eingerichtet, einen Verbindungsprozess abzubrechen, sobald von Seiten des zumindest einen Mobilfunkendgerätes MO1, MO2 der Verbindungsaufbau mit dem unter dem angezeigten Namen NA1, NA2 auftretenden Authentifizierungsendgerät AEG bestätigt ist.

Das Authentifizierungsendgerät AEG weist eine Sende/Empfangseinheit SEE sowie eine Steuerung STR, beispielsweise einen entsprechend programmierten Mikroprozessor auf. Weiters ist in dem Authentifizierungsendgerät AEG ein Speicher SPE vorgesehen, in welchem die Identifikationsnummern ID1, ID2 sowie die Namen NA1, NA2 und weiterer zur Durchführung der Erfindung relevanter Daten gespeichert sind. Das Authentifizierungsendgerät AEG stellt im Wesentlichen eine Funkeinheit dar, welche in jegliche Art von Steuerungssystemen integriert werden kann.

Weiters ist das Authentifizierungsendgerät AEG dazu konfiguriert, nach Bestätigung des Verbindungsaufbaus durch das Mobilfunkendgerät MO1, MO2 einen Aktuator AKT zu betätigen. Vorteilhafterweise beschreibt der Name NA1, NA2 eine von dem Aktuator durchzuführende Tätigkeit TA1, TA2, wobei die auszuführende Tätigkeit TA1, TA2 ebenfalls in dem Speicher SPE des Authentifizierungsendgerätes AEG abgelegt sein kann.

Weiters ist das Authentifizierungsendgerät AEG dazu programmiert, den Namen NA1, NA2 in Abhängigkeit von einer zuletzt durchgeführten Aktion des Aktuators zu ändern.

Darüber hinaus ist das Authentifizierungsendgerät AEG dazu eingerichtet, auch während eines Verbindungsaufbaus zu dem zumindest einen Mobilfunkendgerät MO1, MO2 zu überprüfen, ob andere Mobilfunkendgeräte MO1, MO2 in seinem Sende/Empfangsbereich BER vorhanden sind und zu diesen Mobilfunkendgeräten MO1, MO2 gleichzeitig eine Verbindung aufzubauen.

Bevorzugterweise sind das Authentifizierungsendgerät AEG und die Mobilfunkendgeräte MO1, MO2 Bluetooth-, ZigBee- oder Wi-Fi-Endgeräte.

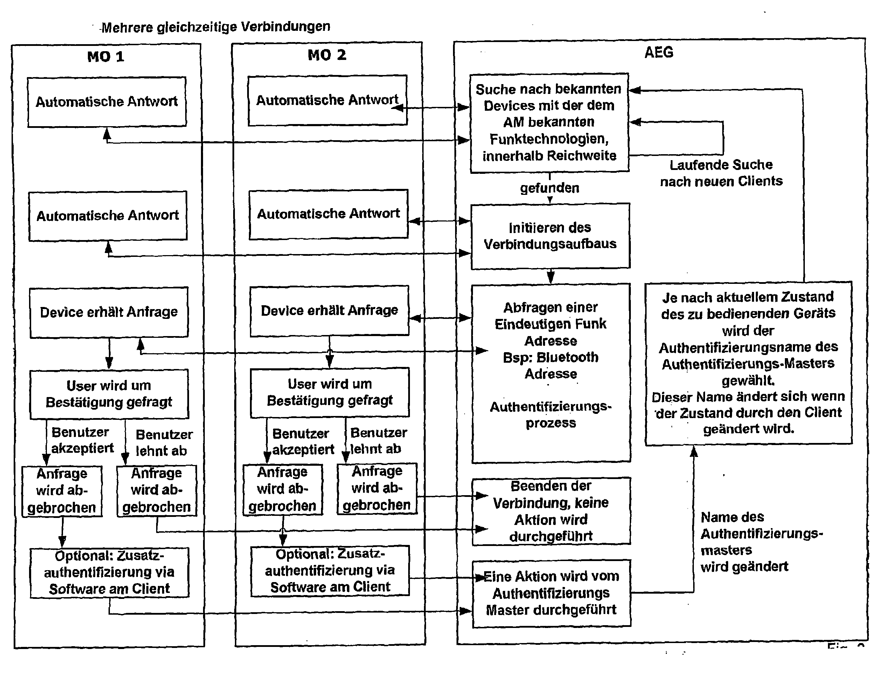

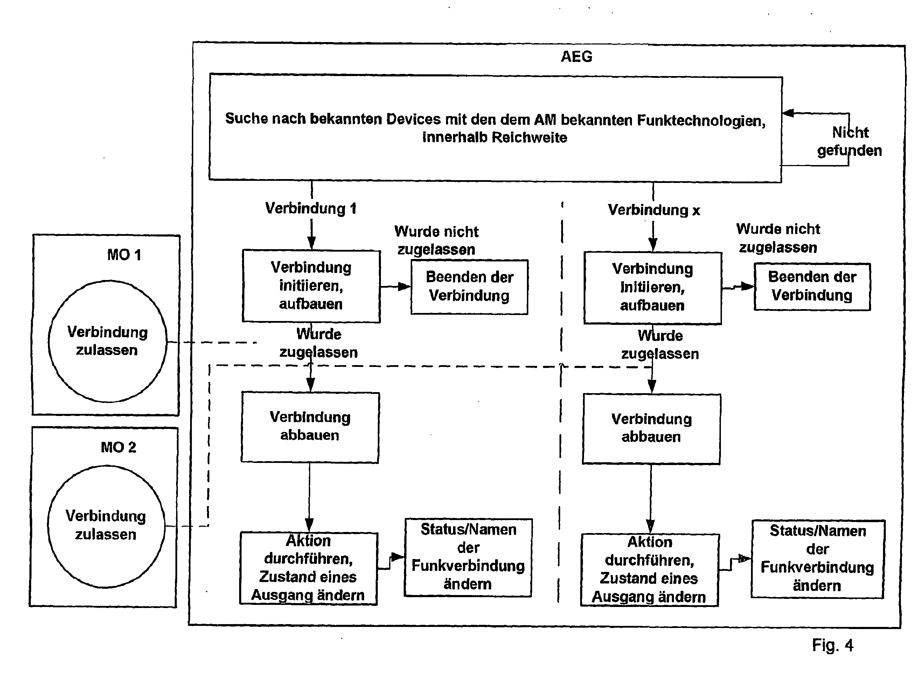

Fig. 3 und 4 zeigen einen Ablauf eines erfindungsgemäßen Verfahrens zur Autorisierung eines oder mehrerer Mobilfunkendgeräte MO1, MO2 mittels eines Authentifizierungsendgerätes AEG, wobei die Autorisierung über Funk erfolgt. Im Folgenden werden die Mobilfunkendgeräte MO1, MO2 als Clients MO1, MO2 und das Authentifizierungsendgerätes AEG als Authentifizierungsmaster AEG bezeichnet.

Jeder Client MO1, MO weist eine Identifikationsnummer ID1, ID2 auf. Bevorzugterweise handelt es sich bei der Identifikationsnummer ID1, ID2 um eine herstellerseitig einmalig vergebene und dem Client MO1, MO2 zugeordnete Gerätenummer.

Sobald ein Client MO1, MO2 in einen Sende/Empfangsbereich BER des Authentifizierungsmasters AEG gelangt, fragt der Authentifizierungsmaster AEG über Funk die Identifikationsnummer ID1, ID2 des Client MO1, MO2 ab und überprüft, ob die abgefragte Identifikationsnummer ID1, ID2 mit einer der gespeicherten Identifikationsnummern ID1, ID2 eines berechtigten Clients übereinstimmt.

Stimmt die Identifikationsnummer ID1, ID2 eines Clients MO1, MO2 nicht mit einer der gespeicherten Identifikationsnummern überein, so wird von dem Authentifizierungsmaster AEG grundsätzlich kein Verbindungsaufbau initiiert. D. h. der Authentifizierungsmaster AEG verhält sich gegenüber dem nicht berechtigten Client MO1, MO2 "stumm". Natürlich kann sich der Authentifizierungsmaster AEG gegenüber dem nicht berechtigten Client MO1, MO2 auch auf eine andere vordefiniert Art verhalten.

Im Fall einer Übereinstimmung der Identifikationsnummern ID1, ID2 der Clients initiiert der Authentifizierungsmaster AEG einen Verbindungsaufbau mit dem bzw. den Clients MO1, MO2. Hierbei gibt der Authentifizierungsmaster AEG als seine Identität bzw. seine Funkadresse den Namen NA1, NA2 an, der jeder der Identifikationsnummern ID1, ID2 zugeordnet ist. Auf einem Display des bzw. der Clients erscheint dann als Name der Gegenstelle, d.h. als Name des Authentifizierungsmasters AEG, der jeweilige Name NA1, NA2.

So kann beispielsweise der der Identifikationsnummer ID1 zugeordnete Name NA1 "Tür öffnen" und der der Identifikationsnummer ID2 zugeordnete Name NA2 "Licht einschalten" lauten. Bei einem von dem Authentifizierungsmaster AEG in Gang gesetzten Verbindungsaufbau erscheint dann auf dem Display des Clients MO1 beispielsweise die Ausgabe "Verbindung aufbauen mit 'Tür öffnen'?". Auf dem Client Mo2 könnte die Ausgabe "Gerät ,Licht einschalten' erkannt. Verbindung mit ,Licht einschalten' herstellen?" erscheinen.

Stimmt der Benutzer des jeweiligen Clients MO1, MO2 dem Verbindungsaufbau zu, so wird hierauf von dem Authentifizierungsmaster AEG der Verbindungsaufbau bzw. die Verbindung zu dem entsprechenden Client MO1, MO2 abgebrochen, wobei der Authentifizierungsmaster nach Erhalt der Bestätigung über den Verbindungsaufbau von Seiten des Clients MO1, MO2 einen entsprechenden Befehl zur Ausführung einer Tätigkeit TA1, TA2 an den Aktuator AKT weiterleitet.

Die von dem Aktuator auszuführende Tätigkeit TA1, TA2 ist ebenfalls der Identifikationsnummer ID1, ID2 zugeordnet und kann auch in dem Authentifizierungsmaster AEG gespeichert sein. Günstigerweise beschreibt der Name NA1, NA2 die von dem Aktuator im Fall der Bestätigung des Verbindungsaufbaus durch einen Benutzer des Clients MO1, MO2 auszuführende Tätigkeit. Auf diese Weise sieht der Benutzer sofort und ohne dass auf dem Client MO1, MO2 eine zusätzliche Software installiert werden muss, welche Aktion er durch Zustimmung zu dem Verbindungsaufbau auslöst.

Kurz zusammengefasst lässt sich sagen, dass der Authentifizierungsmaster AEG Aktionen nur bei bekannten Clients MO1, MO2 durchführt, hierfür wird eine eindeutige Adresse ID1, ID2 des Clients verwendet (Bluetooth-Adresse, ...). D.h. der Client MO1, MO2 muss zuvor manuell bei dem Authentifizierungsmaster bekannt gemacht werden. Bei nicht bekannten Clients kann eine definierte Aktion ausgeführt werden. Der Authentifizierungsmaster AEG führt Aktionen nur nach manueller Betätigung am Client MO1, MO2 aus. Der Authentifizierungsmaster AEG prüft ständig auf allen bekannten Protokollen, ob sich ein Client MO1, MO2 nähert, d. h. ob ein Client MO1, MO2 in den Empfangsbereich des AM eintritt oder ein Signal des Clients MO1, MO2 eine definierte Stärke oder Qualität überschreitet. Ist eine Authentifizierung notwendig, so prüft der Authentifizierungsmaster AEG, ob der Client MO1, MO2 bekannt ist. Ist eine Bestätigung notwendig, so baut der Authentifizierungsmaster AEG eine Verbindung zum Client MO1, MO2 auf, wird der Verbindungsaufbau am Client bestätigt, so wird eine entsprechende Aktion durchgeführt. Ist keine Authentifizierung und keine Bestätigung notwendig, so führt der Authentifizierungsmaster AEG die entsprechende Aktion aus. Der Authentifizierungsmaster AEG kann verschiedene Stati (z. B. Tür offen/Tür geschlossen/...) einnehmen. Je nach Status ändert sich die auszuführende Aktion (Tür schließen/Tür öffnen). Nach dem Ausführen der Aktion kann sich der Status ändern (Tür schließen > Tür geschlossen). Die Art der Aktion kann auch pro Client MO1, MO2 unterschiedlich sein. So kann z. B. mit der Erfindung eine Liftsteuerung realisiert sein die pro Client MO1, MO2 nur bestimmte Stockwerke zulässt.

Der Authentifizierungsmaster AEG kann auch während eines Verbindungsaufbaus zu einem Mobilfunkendgerät MO1, MO2 überprüfen, ob andere Mobilfunkendgeräte MO1, MO2 in seinem Sende/Empfangsbereich BER vorhanden sind und gegebenenfalls auch gleichzeitig zu mehreren berechtigten Mobilfunkendgeräten MO1, MO2 je eine Verbindung aufbauen.

Günstigerweise ändert der Authentifizierungsmaster AEG nach erfolgtem Verbindungsaufbau und Betätigung des Aktuators den Namen NA1, NA2 und die damit verbundene Aktion bzw. Tätigkeit TA1', TA2'. So könnte nach erfolgtem Türöffnen der Name NA1' gesetzt werden, der Name NA1' könnte "Tür schließen" lauten, wobei die damit verbundene Tätigkeit TA1' das Schließen der Tür wäre. Somit kann der Name NA1, NA2 in Abhängigkeit von einer zuletzt durchgeführten Aktion des Aktuators geändert werden.

Wird der Verbindungsaufbau von dem Client MO1, MO2 abgebrochen, so wird keine Aktion ausgeführt.

Grundsätzlich kann auf einem Client MO1, MO2 natürlich auch eine zusätzliche Software installiert sein, um die Sicherheit der Authentifizierung zu erhöhen. So könnte nach erfolgtem Verbindungsaufbau zwischen dem Authentifizierungsmaster AEG und dem Client MO1, MO2 die Verbindung nicht sofort abgebrochen, sondern noch die Eingabe eines Pins von Seiten des Benutzers gefordert werden.

Ganz besonders eignen sich Bluetooth-, ZigBee- oder WIFI als Funkstandards zur Durchführung des erfindungsgemäßen Verfahrens. Im Folgenden sollen die einzelnen Funkstandards, welche dem Fachmann prinzipiell geläufig sind, kurz vorgestellt werden.

Bluetooth ist eine standardisierte kostengünstige Technik zur Funkübertragung von Daten. Zu einem Bluetooth-System gehören: Radio-Komponente, Link-Controller, Link-Manager. Bluetooth-Devices erkennen sich automatisch und bauen eine Netzwerkverbindung auf. Auf einer Trägerfrequenz von 2,4 GHz (ISM-Band) gelangen die Daten von einem Adapter zum anderen, wobei die Signale keine Vorzugsrichtung haben und damit prinzipiell von jedem Gerät zu empfangen sind. Bluetooth arbeitet mit einer Spread-Spectrum-Modulation, kombiniert mit Frequency-Hopping (1600 Frequenzsprünge je Sekunde). Zwischen 2,402 GHz und 2,480 GHz stehen 79 nutzbare Hopping-Frequenzen im Abstand von jeweils 1 MHz zur Verfügung. Eine eindeutige ID plus Verschlüsselung der Daten sorgt dafür, dass nur diejenigen Geräte miteinander kommunizieren können, denen das "erlaubt" ist. Die maximale Datenrate beträgt zurzeit bis zu rund 1 MBit/s und die Reichweite ist momentan auf 100 Meter beschränkt. Um die volle Bluetooth-Funktionalität nutzen zu können, muss das Betriebssystem entsprechende Voraussetzungen erfüllen. Dazu gehört, dass Bluetooth-Hardware erkannt, Verbindungen aufgebaut und Daten sicher übertragen werden.

Sobald Bluetooth-Geräte in Betrieb gesetzt werden, identifizieren sich die einzelnen Bluetooth-Controller innerhalb von zwei Sekunden über eine individuelle und unverwechselbare 48-Bit lange Seriennummer. Im Standby-Modus lauschen unverbundene Geräte in Abständen von 1,28 Sekunden nach Nachrichten und kontrollieren dabei 32 Hop-Frequenzen. Eine Verbindung kann von einem beliebigen Gerät ausgehen, das sich dadurch zum Master erhebt. Der Kontakt zu den Slaves wird durch eine Inquiry-Nachricht (von inquiry (engl.) = Erkundigung) und danach durch eine Page-Message (von to page (engl.) = (per Lautsprecher) ausrufen, message (engl.) = Nachricht) hergestellt, falls die Hardware-Adresse der Geräte unbekannt ist. Bei bekannter Adresse fällt der erste Schritt weg. Im Page-Zustand sendet der Master 16 identische Page-Telegramme auf 16 unterschiedlichen Hopping-Frequenzen, die für die Slaves bestimmt sind. Danach befinden sich die Stationen im Status "Verbunden". Durchschnittlich wird eine Verbindungsaufnahme innerhalb von 0,6 Sekunden erreicht.

Bei Wi-Fi (WLAN) 802.11x handelt es sich um ein drahtloses Datenübertragungsprotokoll, dass dazu entwickelt wurde, Hochgeschwindigkeits-Ethemets ohne Kabel zu erstellen. Dabei dreht es sich um einen so genannten offenen Standard, der auf der Frequenz von 2,4 GHz und mit 13 Kanälen (in Europa, in den USA sind es nur 11) arbeitet. Wie Bluetooth ist auch dieser Standard lizenzfrei. Jedoch überlappen sich bei Wi-Fi die Kanäle teilweise, was zu einer Reduzierung der Übertragungsrate führt. Der 802.11b Standard gestattet eine Bandbreite von 11 Mbit/s, die Version 802.11g sogar 54 Mbit/s. Zukünftig sollen bis zu 320 Mbit/s erreicht werden. Als Verschlüsselungsmöglichkeiten stehen WEP (64 oder 128 Bit Schlüssel) oder WPA (128 Bit Schlüssel und ein bis zu 63 Zeichen langes Passwort) zur Verfügung.

ZigBee IEEE 802.15.4 ermöglicht es, Haushaltsgeräte, Sensoren, uvm. auf Kurzstrecken (10 - 75 m) zu verbinden und stellt einen Protokollstack dar, der nach dem OSI-Modell auf den im Standard IEEE 802.15.4 spezifizierten OSI-Subschichten PHY und MAC aufsetzt. Es ist ebenfalls der Einsatz batterieloser, wartungsfreier Funkschalter und Funksensoren in schwer zugänglichen Bereichen vorgesehen, wo der regelmäßige Austausch von Batterien nur mit großem Aufwand möglich wäre.

Man unterscheidet drei Rollen, die ein ZigBee-Gerät erfüllen kann:

End Device: Einfache Geräte wie z. B. Lichtschalter implementieren nur einen Teil der ZigBee Protokolle und werden daher auch RFD (reduced function devices) genannt. Sie melden sich an einem Router ihrer Wahl an und bilden so mit ihm ein Netzwerk in Stern-Topologie.

Router: FFD Geräte (full function devices) können auch als Router agieren, melden sich an einem existierenden Router an und bilden so ein Netzwerk in Baum-Topologie, durch Ausnutzung von Abkürzungen mitunter auch ein vermaschtes Netzwerk

Coordinator: Genau ein Router innerhalb eines PAN übernimmt zusätzlich die Rolle des Coordinators. Er gibt grundlegende Parameter des PAN vor und verwaltet das Netz.

Anhand eines kurzen Beispiels soll eine Variante der Erfindung, bei welcher Bluetooth zum Einsatz kommt dargestellt werden.

Ein Client MO1, MO2 dessen Bluetooth Adresse (= Seriennummer = Identifikationsnummer ID1, ID2) im Authentifizierungsmaster AEG frei geschalten ist dringt in die Reichweite des Bluetooth Funksignals des Authentifizierungsmaster AEG ein. Dieser erkennt den Client MO1, MO2 und startet einen Authentifizierungsprozess.

Der Name der Bluetooth Verbindung (= Name NA1, NA2 des Authentifizierungsmasters AEG) wird von vom Authentifizierungsmaster AEG geändert, je nachdem welche Aktion vom Client MO1, MO2 bestätigt werden soll.

Soll sich ein Tor öffnen wird der Name NA1, NA2 der Bluetooth Verbindung "Tor öffnen" lauten und umgekehrt.

Der Client MO1, MO2 muss diesen Authentifizierungsprozess "Tor öffnen" bestätigen der abbrechen.

Nach der Bestätigung beendet der Bluetooth Master AEG die Verbindung und führt die Aktion Tor öffnen aus.

Wird die Verbindungsanfrage "Tor öffnen" vom Client MO1, MO2 abgebrochen, wird keine Aktion durchgeführt.

Es können gleichzeitig beliebig viele Clients MO1, MO2 diese Aktionen gleichzeitig ausführen.

Zusammenfassend lässt sich sagen, dass sich mit der Erfindung ein Autorisierungs-, Zutritts- und Steuerungssystem schaffen lässt, welches es auf einfache Weise ermöglicht, mit Hilfe einer herkömmlichen Funkschnittstelle - wie Bsp. Bluetooth - eine Zutritts Überwachung durchzuführen.

Das neuartige an dieser Erfindung ist, dass die Erkennung ob der Client (Bsp: Mobiltelefon, PDA, Notebook, Schlüsselanhänger um nur wenige zu nennen) die Berechtigung besitzt ohne dass Software auf den Clients ausgeführt wird und ohne weiteres Zutun des Benutzers - wenn gewünscht - dadurch eine Aktion ausgeführt wird.

Die Sicherheit dieses System kann durch eine zusätzliche Aktion oder Pin Eingabe am Client weiter erhöht werden. Folgende Anwendungen sind nur exemplarische Auszüge aus einem großen Spektrum an verschiedensten Anwendungsmöglichkeiten:
Jede Art von Öffnern für ein oder mehrere Benutzer (Bsp: Tor, Garage, Balken,..)
Auto Tür/ Fenster/Schiebedach Öffner für ein oder mehrere Benutzer;
Authentifizieren für Sicherheitssysteme (hard- und softwarebasierend);
Erfassung von Menschenströmen;
Zutrittskontrolle mit/ohne Monitoring und
jede Art von Schalten, welches durch den Client ausgelöst wird.

## Patentansprüche

1. Verfahren zur Autorisierung zumindest eines Mobilfunkendgerätes (MO1, MO2) mittels eines Authentifizierungsendgerätes (AEG), wobei das zumindest eine Mobilfunkendgerät (MO1, MO2) eine Identifikationsnummer (ID1, ID2) aufweist und die Identifikationsnummer (ID1, ID2) des zumindest einen Mobilfunkendgerätes (MO1, MO2) in dem Authentifizierungsendgerät (AEG) gespeichert ist, wobei das Authentifizierungsendgerät (AEG), sobald ein Mobilfunkendgerät (ID1, ID2) in einen Sende/Empfangsbereich (BER) des Authentifizierungsendgerätes (AEG) gelangt, über Funk abfragt und überprüft, ob eine Identifikationsnummer (ID1, ID2) des Mobilfunkendgerätes (MO1, MO2) mit der gespeicherten Identifikationsnummer (ID1, ID2) übereinstimmt, **dadurch gekennzeichnet, dass** der Identifikationsnummer (ID1, ID2) des zumindest einen Mobilfunkendgeräts (MO1, MO2) in dem Authentifizierungsendgerät (AEG) zumindest ein Name (NA1, NA2) zugeordnet ist und weiters das Authentifizierungsendgerät (AEG) bei der Abfrage oder Überprüfung, ob eine Identifikationsnummer (ID1, ID2) des Mobilfunkendgerätes (MO1, MO2) mit der gespeicherten Identifikationsnummer (ID1, ID2) übereinstimmt, im Fall einer Übereinstimmung unter dem der Identifikationsnummer (ID1, ID2) zugeordneten Namen (NA1, NA2) einen Verbindungsaufbau mit dem Mobilfunkendgerät (MO1, MO2) initiiert, wobei der Name (NA1, NA2) auf dem Mobilfunkengerät angezeigt wird und das Authentifizierungsendgerät (AEG) einen Verbindungsaufbau abbricht, sobald von Seiten des zumindest einen Mobilfunkendgerätes (MO1, MO2) der Verbindungsaufbau mit dem unter dem angezeigten Namen (NA1, NA2) auftretenden Authentifizierungsendgerät (AEG) bestätigt wird.

2. Verfahren nach Anspruch 1, **dadurch gekennzeichnet, dass** nach Bestätigung des Verbindungsaufbaus durch das Mobilfunkendgerät (MO1, MO2) ein Aktuator betätigt wird.

3. Verfahren nach Anspruch 2, **dadurch gekennzeichnet, dass** der Name (NA1, NA2) eine von dem Aktuator durchzuführende Tätigkeit (TA1, TA2) beschreibt.

4. Verfahren nach einem der Ansprüche 2 oder 3, **dadurch gekennzeichnet, dass** der Name (NA1, NA2) in Abhängigkeit von einer zuletzt durchgeführten Aktion des Aktuators geändert wird.

5. Verfahren nach einem der Ansprüche 1 bis 4, **dadurch gekennzeichnet, dass** die Identifikationsnummer (ID1, ID2) eine herstellerseitig einmalig vergebene Gerätenummer ist.

6. Verfahren nach einem der Ansprüche 1 bis 5, **dadurch gekennzeichnet, dass** das Authentifizierungsgerät (AEG) auch während eines Verbindungsaufbaus zu dem zumindest einen Mobilfunkendgerät (MO1, MO2) überprüft, ob andere Mobilfunkendgeräte (MO1, MO2) in seinem Sende/Empfangsbereich (BER) vorhanden sind.

7. Verfahren nach einem der Ansprüche 1 bis 6, **dadurch gekennzeichnet, dass** das Authentifizierungsendgerät (AEG) gleichzeitig zu mehreren Mobilfunkendgeräten (MO1, MO2) je eine Verbindung aufbaut.

8. Verfahren nach einem der Ansprüche 1 bis 7, **dadurch gekennzeichnet, dass** zur Durchführung des Verfahrens ein Bluetooth-, ZigBee- oder Wi-Fi-Funkstandard verwendet wird.

9. System (SYS) zur Autorisierung zumindest eines Mobilfunkendgerätes (MO1, MO2) mittels eines Authentifizierungsendgerätes (AEG), wobei das zumindest eine Mobilfunkendgerät (MO1, MO2) eine Identifikationsnummer (ID1, ID2) aufweist und die Identifikationsnummer (ID1, ID2) des zumindest einen Mobilfunkendgeräts (MO1, MO2) in dem Authentifizierungsgerät (AEG) gespeichert ist, wobei das Authentifizierungsendgerät (AEG) dazu eingerichtet ist, sobald ein Mobilfunkendgerät (MO1, MO2) in einen Sende/Empfangsbereich (BER) des Authentifizierungsendgerätes (AEG) gelangt, über Funk abzufragen und zu überprüfen, ob eine Identifikationsnummer (ID1, ID2) des Mobilfunkendgerätes (MO1, MO2) mit der gespeicherten Identifikationsnummer (ID1, ID2) übereinstimmt, **dadurch gekennzeichnet, dass** der Identifikationsnummer (ID1, ID2) des zumindest einen Mobilfunkendgeräts (MO1, MO2) in dem Authentifizierungsendgerät (AEG) zumindest ein Name (NA1, NA2) zugeordnet ist, und weiters das Authentifizierungsendgerät (AEG) dazu eingerichtet ist, bei der Abfrage oder Überprüfung, ob eine Identifikationsnummer (ID1, ID2) des Mobilfunkendgerätes (MO1, MO2) mit der gespeicherten Identifikationsnummer (ID1, ID2) übereinstimmt, im Fall einer Übereinstimmung unter dem der Identifikationsnummer (ID1, ID2) zugeordneten Namen (NA1, NA2) einen Verbindungsaufbau mit dem Mobilfunkendgerät (MO1, MO2) zu initiieren, wobei das Mobilfunkendgerät (MO1, MO2) dazu eingerichtet ist, den Namen (NA1, NA2) auf dem Mobilfunkendgerät (MO1, MO2) anzuzeigen und das Authentifizierungsendgerät (AEG) weiters dazu eingerichtet ist, einen Verbindungsaufbau abzubrechen, sobald von Seiten des zumindest einen Mobilfunkendgerätes (MO1, MO2) der Verbindungsaufbau mit dem unter dem angezeigten Namen (NA1, NA2) auftretenden Authentifizierungsendgerät (AEG) bestätigt ist.

10. System nach Anspruch 9, **dadurch gekennzeichnet, dass** es dazu eingerichtet ist, nach Bestätigung des Verbindungsaufbaus durch das Mobilfunkendgerät (MO1, MO2) einen Aktuator zu betätigen.

11. System nach Anspruch 10, **dadurch gekennzeichnet, dass** der Name (NA1, NA2) eine von dem Aktuator durchzuführende Tätigkeit beschreibt.

12. System nach Anspruch 10 oder 11, **dadurch gekennzeichnet, dass** es dazu eingerichtet ist, den Namen (NA1, NA2) in Abhängigkeit von einer zuletzt durchgeführten Aktion des Aktuators zu ändern.

13. System nach einem der Ansprüche 9 bis 12, **dadurch gekennzeichnet, dass** die Identifikationsnummer (ID1, ID2) eine herstellerseitig einmalig vergebene Gerätenummer ist.

14. System nach einem der Ansprüche 9 bis 13, **dadurch gekennzeichnet, dass** das Authentifizierungsgerät (AEG) dazu eingerichtet ist, auch während eines Verbindungsaufbaus zu dem zumindest einen Mobilfunkendgerät (MO1, MO2) zu überprüfen, ob andere Mobilfunkendgeräte (MO1, MO2) in seinem Sende/Empfangsbereich (BER) vorhanden sind.

15. System nach einem der Ansprüche 9 bis 14, **dadurch gekennzeichnet, dass** das Authentifizierungsendgerät (AEG) dazu eingerichtet ist, gleichzeitig zu mehreren Mobilfunkendgeräten (MO1, MO2) je eine Verbindung aufzubauen.

16. System nach einem der Ansprüche 9 bis 15, **dadurch gekennzeichnet, dass** das Authentifizierungsgerät (AEG) und das zumindest eine Mobilfunkendgerät (MO1, MO2) dazu eingerichtet sind, gemäß dem Bluetooth-, ZigBee- oder Wi-Fi-Funkstandard Daten auszutauschen.

## Claims

1. A process of authorisation concerning at least one mobile unit (MO1, MO2), and the authorisation thereof via an authentication device (AEG). At least one mobile unit (MO1, MO2) will present a unique identification number (ID1, ID2) and the identification number (ID1, ID2) of the aforementioned mobile unit is stored in the authentication device (AEG). As soon as a mobile unit (ID1, ID2) is within the range of transmission/reception (BER) of the authentication device (AEG), the authentication device (AEG) will prompt and verify that the identification number (ID1, ID2) of the mobile unit (MO1, MO2) received via radio wave, corresponds to the stored identification number (ID1, ID2). This is established by the identification number (ID1, ID2) of at least one mobile unit (MO1, MO2) being assigned at least one name (NA1, NA2) in the authentication device (AEG). Furthermore, upon request/verification by the authentication device (AEG), if the identification number (IDI, ID2) of a mobile unit (MO1, MO2) corresponds to the stored identification number (ID1, ID2) on the authentication device (AEG), it will establish a connection with the mobile unit (MO1, MO2) under the name (NA1, NA2) assigned to the identification number (ID1, ID2), whereby the name (NA1, NA2) is displayed on the mobile unit, and the authentication device (AEG) will abort the connection, as soon as at least one mobile unit (MO1, MO2) confirms the connection to the authentication device (AEG), as displayed with the name (NA1, NA2).

2. The process according to claim 1 is established by an actuator being triggered after confirmation of a successful connection from the mobile unit (MO1, MO2).

3. The process according to claim 2 is established by the name (NA1, NA2) describing the task (TA1, TA2) to be executed by the actuator.

4. The process according to claims 2 or 3 is established by the name (NA1, NA2) being modified based on the most recent action undertaken by the actuator.

5. The process according to claims 1 through 4 is established by the identification number (ID1, ID2) being a unique device number assigned by the manufacturer.

6. The process according to claims 1 through 5 is established by the authentication device (AEG) checking for other mobile units (MO1, MO2) within its transmission/reception range (BER), whilst simultaneously establishing a connection with at least one mobile unit (MO1, MO2).

7. The process according to claims 1 through 6 is established by the authentication device (AEG) connecting to multiple mobile units (MO1, MO2) simultaneously.

8. The process according to claims 1 through 7 is established by the utilisation of Bluetooth, ZigBee or WIFI-standards for the implementation of the invention.

9. A system (SYS) of authorisation concerning at least one mobile unit (MO1, MO2), and the authorisation thereof via an authentication device (AEG). At least one mobile unit (MO1, MO2) will present a unique identification number (ID1, ID2) and the identification number (ID1, ID2) of the aforementioned mobile unit is stored in the authentication device (AEG). As soon as a mobile unit (MO1, MO2) is within the range of transmission/reception (BER) of the authentication device (AEG), the authentication device (AEG) is able to prompt and verify that the identification number (ID1, ID2) of the mobile unit (MO1, MO2) received via radio wave, corresponds to the stored identification number (ID1, ID2). This is established by the identification number (ID1, ID2) of at least one mobile unit (MO1, MO2) being assigned at least one name (NA1, NA2) in the authentication device (AEG). Furthermore, upon request/verification by the authentication device (AEG), if the identification number (ID1, ID2) of a mobile unit (MO1, MO2) corresponds to the stored identification number (ID1, ID2) on the authentication device (AEG), it is able to establish a connection with the mobile unit (MO1, MO2) under the name (NA1, NA2) assigned to the identification number (ID1, ID2), whereby the name (NA1, NA2) is able to be displayed on the mobile unit (MO1, MO2), and the authentication device (AEG) will abort the connection, as soon as at least one mobile unit (MO1, MO2) confirms the connection to the authentication device (AEG), as displayed with the name (NA1, NA2).

10. The system according to claim 9 is established by it being able to trigger an actuator, after confirmation of a successful connection from the mobile unit (MO1, MO2).

11. The system according to claim 10 is established by the name (NA1, NA2) describing the task to be executed by the actuator.

12. The system according to claim 10 or 11 is established by it being able to modify the name (NA1, NA2) based on the most recent action undertaken by the actuator.

13. The system according to claim 9 through 12 is established by the identification number (ID1, ID2) being a unique device number assigned by the manufacturer.

14. The system according to claims 9 through 13 is established by the authentication device (AEG) being able to check for other mobile units (MO1, MO2) within its transmission/reception range (BER), whilst simultaneously establishing a connection with at least one mobile unit (MO1, MO2).

15. The system according to claims 9 through 14 is established by the authentication device (AEG) being able to connect to multiple mobile units (MO1, MO2) simultaneously.

16. The system according to claims 9 through 15 is established by the authentication device (AEG) and at least one mobile unit (MO1, MO2) being equipped for data transfer via bluetooth, ZigBee or WIFI-standard.

## Revendications

1. Procédé destiné à autoriser au moins un terminal de radiocommunication (TR1, TR2) par le biais d'un terminal d'authentification (TA), au moins un terminal de radiocommunication (TR1, TR2) présentant un numéro d'identification (ID1, ID2) et ce numéro d'identification (ID1, ID2) se rapportant au terminal de radiocommunication (TR1, TR2) est enregistré dans le terminal d'authentification (TA), qui à son tour dès qu'un terminal de radiocommunication (TR1, TR2) pénètre dans la zone d'émission/de réception (ZER) du terminal d'authentification (TA) interroge et vérifie par radio la concordance d'un numéro d'identification (ID1, ID2) du terminal de radiocommunication (TR1, TR2) avec le numéro d'identification (ID1, ID2) enregistré, **caractérisé en ce que** le numéro d'identification (ID1, ID2) d'un des terminaux de radiocommunication (TR1, TR2) au moins soit attribué un nom (NO1, N02) dans le terminal d'authentification (TA), et **en ce que**, le terminal d'authentification (TA) au cours de la demande ou vérification, et si un numéro d'identification (ID1, ID2) du terminal de radiocommunication (TR1, TR2) correspond au numéro d'identification (ID1, ID2) enregistré, initie une mise en place d'une connexion avec le terminal de radiocommunication (TR1, TR2) au nom (NO1, N02) attribué au numéro d'identification (ID1, ID2), le nom (NO1, NO2) étant affiché sur le terminal de radiocommunication et le terminal d'authentification (TA) rompant la mise en place d'une connexion, dès que de la part d'un des terminaux de radiocommunication au moins (TR1, TR2) la mise en place de la connexion avec le terminal d'authentification (TA) sous le nom affiché (NO1, N02) est confirmée.

2. Procédé selon la revendication 1, **caractérisé en ce que** suite à la confirmation de la mise en place de la connexion par le terminal de radiocommunication (TR1, TR2), un actionneur est commandé.

3. Procédé selon la revendication 2, **caractérisé en ce que** le nom (NO1, N02) décrit une des activités (ACT1, ACT2) à exécuter par l'actionneur.

4. Procédé selon l'une des revendications 2 ou 3, **caractérisé en ce que** le nom (NO1, N02) est modifié en fonction de la dernière action exécutée par l'actionneur.

5. Procédé selon l'une des revendications 1 à 4, **caractérisé en ce que** le numéro d'identification (ID1, ID2) est un numéro d'appareil unique attribué au départ de l'usine.

6. Procédé selon l'une des revendications 1 à 5, **caractérisé en ce que** le terminal d'authentification (TA) vérifie même durant la mise en place d'une connexion vers un des terminaux de radiocommunication au moins (TR1, TR2), si d'autres terminaux de radiocommunication (TR1, TR2) sont disponibles dans sa zone d'émission/de réception (ZER).

7. Procédé selon l'une des revendications 1 à 6, **caractérisé en ce que** le terminal d'authentification (TA) peut mettre en place simultanément une connexion respective vers plusieurs terminaux de radiocommunication (TR1, TR2).

8. Procédé selon l'une des revendications 1 à 7, **caractérisé en ce qu'**un standard radio Bluetooth, ZigBee ou Wi-Fi est utilisé pour la réalisation du procédé.

9. Système (SYS) destiné à autoriser au moins un terminal de radiocommunication (TR1, TR2) par le biais d'un terminal d'authentification (TA), au moins un terminal de radiocommunication (TR1, TR2) présentant un numéro d'identification (ID1, ID2) et ce numéro d'identification (ID1, ID2) se rapportant au terminal de radiocommunication (TR1, TR2) est enregistré dans le terminal d'authentification (TA), qui à son tour dès qu'un terminal de radiocommunication (TR1, TR2) pénètre dans une zone d'émission/de réception (ZER) du terminal d'authentification (TA) interroge et vérifie par radio la concordance d'un numéro d'identification (ID1, ID2) du terminal de radiocommunication (TR1, TR2) avec le numéro d'identification (ID1, ID2) enregistré, **caractérisé en ce que** le numéro d'identification (ID1, ID2) d'un des terminaux de radiocommunication (TR1, TR2) au moins est attribué un nom (NO1, N02) dans le terminal d'authentification (TA), et **en ce que**, le terminal d'authentification (TA) au cours de la demande ou vérification, et si un numéro d'identification (ID1, ID2) du terminal de radiocommunication (TR1, TR2) correspond au numéro d'identification (ID1, ID2) enregistré, initie une mise en place d'une connexion avec le terminal de radiocommunication (TR1, TR2) au nom (NO1, N02) attribué au numéro d'identification (ID1, ID2), le terminal de radiocommunication TR1, TR2) pouvant afficher le nom (NO1, N02) sur le terminal de radiocommunication (TR1, TR2), et le terminal d'authentification (TA) pouvant rompre la mise en place d'une connexion, dès que de la part d'un des terminaux de radiocommunication au moins (TR1, TR2) la mise en place de la connexion avec le terminal d'authentification (TA) sous le nom affiché (NO1, N02) est confirmée.

10. Système selon la revendication 9, **caractérisé en ce qu'**il est destiné à commander un actionneur après la confirmation d'une mise en place d'une connexion par le terminal de radiocommunication (TR1, TR2).

11. Système selon la revendication 10, **caractérisé en ce que** le nom (NO1, N02) décrit une des activités (ACT1, ACT2) à exécuter par l'actionneur.

12. Système selon les revendications 10 ou 11, **caractérisé en ce qu'**il est destiné à modifier le nom (NO1, N02) en fonction de la dernière action exécutée par l'actionneur.

13. Système selon l'une des revendications 9 à 12, **caractérisé en ce que** le numéro d'identification (ID1, ID2) est un numéro d'appareil unique attribué au départ de l'usine.

14. Système selon l'une des revendications 9 à 13, **caractérisé en ce que** le terminal d'authentification (TA) vérifie même durant la mise en place d'une connexion vers un des terminaux de radiocommunication au moins (TR1, TR2), si d'autres terminaux de radiocommunication (TR1, TR2) sont disponibles dans sa zone d'émission/de réception (ZER).

15. Système selon l'une des revendications 9 à 14, **caractérisé en ce que** le terminal d'authentification (TA) peut mettre en place simultanément une connexion respective vers plusieurs terminaux de radiocommunication (TR1, TR2).

16. Système selon l'une des revendications 9 à 15, **caractérisé en ce que** le terminal d'authentification (TA) et au moins un des terminaux de radiocommunication (TR1, TR2) sont destinés à transmettre des données conformément au standard radio Bluetooth, ZigBee ou Wi-Fi.
